# EUROPÄISCHE PATENTSCHRIFT

(11) **EP 1 113 942 B1**
(45) Veröffentlichungstag und Bekanntmachung des Hinweises auf die Patenterteilung: **06.05.2004**
(21) Anmeldenummer: 99944114.0
(22) Anmeldetag: 20.08.1999
(51) Int. Cl.: B60J 5/04

(54) **KAROSSERIEBAUTEIL**
BODYWORK COMPONENT
ELEMENT DE CARROSSERIE

(30) Priorität: 17.09.1998 DE 19842692
(43) Veröffentlichungstag der Anmeldung: 11.07.2001
(73) Patentinhaber: Volkswagen Aktiengesellschaft, 38436 Wolfsburg (DE)
(72) Erfinder: BIRKLE, Ernst-Herbert, D-38108 Braunschweig (DE); LINEK, Rudolf, D-38518 Gifhorn (DE); TRESCHER, Hans-Ulrich, D-38518 Gifhorn (DE)
(74) Vertreter: Fritz, Edmund Lothar, Dipl.-Chem.
(86) Internationale Anmeldenummer: PCT/EP1999/006112
(87) Internationale Veröffentlichungsnummer: WO 2000/017000

(56) Entgegenhaltungen:
- EP-A- 0 060 556
- EP-A- 0 236 291
- EP-A- 0 495 715
- DE-A- 2 414 114
- US-A- 3 964 208
- US-A- 4 369 608
- US-A- 5 603 548

## Beschreibung

Die vorliegende Erfindung betrifft ein Karosseriebauteil umfassend wenigstens ein Außenblech, wenigstens einen Verstärkungsträger und ein zwischen dem Außenblech und dem Verstärkungsträger angeordnetes Schaumstoffmaterial sowie ein Verfahren zur Herstellung eines derartigen Karosseriebauteils.

Aus dem Stand der Technik sind Karosseriebauteile der eingangs genannten Gattung bekannt geworden. Beispielsweise beschreibt die DE 24 14 114 A1 ein Karosseriebauteil, das beispielsweise eine Kraftfahrzeugtür sein kann, mit einem Außenblech, an dem ein Verstärkungsträger befestigt wird. Es handelt sich um einen zum Außenblech hin offenen Träger, der zur Querverstärkung der Tür verwendet wird. Dieser zum Türaußenblech hin offene Träger bildet mit dem Türaußenblech einen Innenraum, der mit einem Kunststoffmaterial ausgefüllt wird. Für ein solches Kunststoffmaterial kann ein Schaumstoff, beispielsweise ein Polyurethanschaum verwendet werden. Das Volumen dieses Schaumstoffmaterials liegt jedoch von vornherein fest und erfährt im Fertigungsprozeß des Karosseriebauteils keine Veränderung.

Aus der EP-A-0 495 715 ist ein Karosseriebauteil bekannt, bei dem ein Hohlraum zwischen zwei Blechen mit einem Schaumstoffmaterial vollständig ausgefüllt wird. Dazu wird ein Polyurethanschaum in den Zwischenraum injiziert, wonach nach Abschluss des Polymerisationsvorgangs das Schaumstoffmaterial den Hohlraum ausfüllt. Bei dem Schaumstoffmaterial handelt es sich um ein relativ festes Material mit einem geringen Anteil an offenen Poren von nur etwa 5 %. Dieses dichte Material widersteht einer Kompression und der Schaumstoff dient dazu, bei einem Aufprall die Energie aufzufangen.

Aufgabe der vorliegenden Erfindung ist es, ein Karosseriebauteil der eingangs genannten Gattung zu schaffen, das verbesserte akustische Eigenschaften, das heißt eine erhöhte Schalldämmung aufweist.

Die Lösung dieser Aufgabe liefert ein erfindungsgemäßes Karosseriebauteil der eingangs genannten Gattung mit den kennzeichnenden Merkmalen des Hauptanspruchs.

Aufgabe der Erfindung ist es weiterhin ein Verfahren zur Herstellung eines Karosseriebauteils der eingangs genannten Gattung zur Verfügung zu stellen, welches verbesserte akustische Eigenschaften, das heißt eine erhöhte Schalldämmung aufweist, wobei das Verfahren insbesondere eine rasche Serienfertigung eines solchen Karosseriebauteils mit relativ geringem Aufwand ermöglicht.

Die Lösung dieser Aufgabe liefert ein erfindungsgemäßes Verfahren der eingangs genannten Gattung mit den kennzeichnenden Merkmalen des Anspruchs 10.

Erfindungsgemäß ist vorgesehen, daß das zwischen dem Außenblech und dem Verstärkungsträger angeordnete Schaumstoffmaterial ein geblähtes Material ist, das aufgebracht ist zunächst in blähbarer Form und das durch Wärmezufuhr in den Zwischenraum zwischen Verstärkungsträger und Außenblech gebläht ist. Vorzugsweise füllt das geblähte Material den Zwischenraum zwischen Verstärkungsträger und Außenblech weitgehend aus und stellt eine Verbindung zwischen Verstärkungsträger und dem Außenblech her.

Bei einem derartigen Karosseriebauteil stellt das Außenblech ein Körperschwingungszentrum dar. Durch die erfindungsgemäße Verbindung des Außenblechs mit dem Verstärkungsträger als weiter innen liegendem Karosseriebauelement über das zunächst in blähbarer Form aufgebrachte geblähte Material wird eine erhöhte Schalldämmung erzielt. Dabei kann man mit einem relativ geringen Materialeinsatz einer der wesentlichen Lärmquellen an einem Fahrzeug entgegenwirken, die durch die Schwingungen von Außenblechbauteilen einer Karosserie verursacht wird. Vorzugsweise verwendet man dabei ein geeignetes geblähtes Material, das bereits in sich gute schalldämmende Eigenschaften aufweist.

Gemäß einer bevorzugten Weiterbildung der Erfindung ist vorgesehen, daß das geblähte Material elastische Eigenschaften aufweist, derart, daß bei Verformung des Außenblechs auf dieses eine Rückstellkraft zur Wiederherstellung der ursprünglichen Form ausgeübt wird. In diesem Fall hat man den zusätzlichen Vorteil, daß bei einem Aufprall verursachte Verformungsschäden durch das erfindungsgemäße geblähte Material zumindest wesentlich verringert werden können, da das geblähte Material die Rückverformung begünstigt.

Weitere Vorteile liegen darin, daß das erfindungsgemäße geblähte Material in der Regel ein relativ geringes spezifisches Gewicht aufweist und dadurch bei Verwendung von Karosseriebauteilen der erfindungsgemäßen Art eine Reduzierung des Gesamtgewichts der Karosserie des Fahrzeugs möglich ist. Im Rahmen der vorliegenden Erfindung kann das Karosseriebauteil beispielsweise eine Fahrzeugtür sein, wobei in diesem Fall das Außenblech ein Türaußenblech ist und der Verstärkungsträger ein Seitenaufprallträger ist. In der Regel verläuft dieser Seitenaufprallträger (vorzugsweise Querträger) überwiegend horizontal. Bei einem solchen Karosseriebauteil in Form einer Fahrzeugtür läßt sich durch die Verwendung des geblähten Materials im Rahmen der Erfindung beispielsweise eine Gewichtsersparnis von einigen Kilogramm pro Fahrzeugtür erzielen, beispielsweise in der Größenordnung von 2 bis 3 kg pro Fahrzeugtür.

Das erfindungsgemäße Verfahren ist vergleichsweise einfach und ermöglicht eine zügige Serienfertigung. Somit läßt sich die Fertigungszeit für das Karosseriebauteil beziehungsweise die Karosserie insgesamt reduzieren. Aufwendige Zusatzeinrichtungen sind bei der Fertigung nicht notwendig. Der Fertigungsaufwand wird somit gegenüber einer herkömmlichen Fertigung eines Karosseriebauteils nicht nennenswert erhöht. Das erfindungsgemäße Verfahren erlaubt eine automatische Fertigung der erfindungsgemäßen Karosseriebauteile mit einem hohen Qualitätsstandard.

Vorzugsweise wird geblähtes Material verwendet, das besonders schwingungsstabil, geruchs- und emissionsfrei ist, keine hygroskopischen Eigenschaften hat und bei dessen Verbrennung keine Schadstoffe in nennenswertem Umfang auftreten, so daß die Entsorgung eines erfindungsgemäßen Karosseriebauteils nach Ablauf der Gebrauchsdauer des Fahrzeugs problemlos möglich ist. Geeignete Schaumstoffmaterialien mit den genannten Eigenschaften sind dem einschlägigen Durchschnittsfachmann bekannt und stehen somit zur Verfügung.

Gemäß einer bevorzugten Weiterbildung der Erfindung geht man so vor, daß man das Material in blähbarer Form zuerst auf den Verstärkungsträger aufbringt. Dies kann beispielsweise durch Aufkleben erfolgen. Anschließend wird der so mit dem Material in blähbarer Form versehene Verstärkungsträger mit dem Außenblech verbaut. Die Verbindung der Teile geschieht durch Wärmezufuhr. Vorzugsweise verwendet man ein Schaumstoffmaterial, das bei einer Temperatur oberhalb von etwa 200° C, vorzugsweise oberhalb von etwa 220° C expandiert. Das erfindungsgemäße geblähte Material ist vorzugsweise auch bei darüberhinausgehenden Temperaturen - im geblähten Zustand - noch stabil. Bevorzugt ist eine Wärmestabilität bis zu einer Temperatur von wenigstens etwa 250° C. Besonders umweltfreundlich ist ein solches Material, wenn es bei wesentlich darüberhinausgehenden Temperaturen weitgehend rückstandsfrei verbrennt.

Eine bevorzugte konstruktive Lösungsvariante der Erfindung sieht vor, daß der Verstärkungsträger an seinen beiden Enden durch Einstecken in eine Führung montiert ist und so mit dem Außenblech des Karosseriebauteils verbindbar ist.

Nachfolgend wird die vorliegende Erfindung anhand eines Ausführungsbeispiels unter Bezugnahme auf die beiliegenden Zeichnungen näher erläutert. Dabei zeigen
- Fig. 1: einen schematisch vereinfachten vertikalen Schnitt durch ein erfindungsgemäßes Karosseriebauteil;
- Fig. 2: eine vergrößerte Detailansicht eines Ausschnitts aus der Schnittdarstellung des erfindungsgemäßen Karosseriebauteils von Fig. 1.

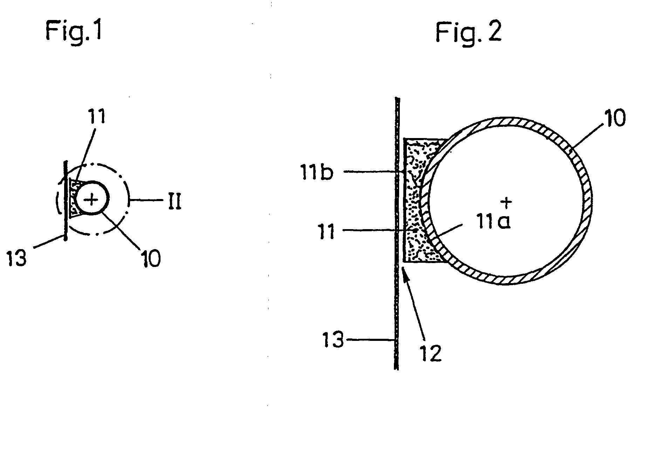

Zunächst wird auf Fig. 1 Bezug genommen. Bei dem erfindungsgemäßen Karosseriebauteil, das in der Zeichnung in stark schematisch vereinfachter Weise im vertikalen Schnitt dargestellt ist, handelt es sich um eine Fahrzeugtür. Diese Fahrzeugtür umfaßt ein Türaußenblech 13 und einen Verstärkungsträger 10, der ein in Querrichtung der Fahrzeugtür verlaufender Seitenaufprallträger ist. Zwischen dem Verstärkungsträger 10 und dem Türaußenblech 13 befindet sich ein Material 11, das zunächst in blähbarer Form aufgebracht wird und bei Wärmezufuhr in den Zwischenraum zwischen Verstärkungsträger 10 und Türaußenblech 13 gebläht wird. Bei diesem Material 11 handelt es sich um ein Schaumstoffmaterial, das vorzugsweise gute schalldämmende Eigenschaften aufweist. Dieses blähbare Material 11 expandiert bei Wärmezufuhr vorzugsweise bei einer Temperatur oberhalb von etwa 200° C und stellt so eine Verbindung zwischen dem Türaußenblech 13 und dem Verstärkungsträger 10 her.

Aus der vergrößerten Detaildarstellung gemäß Fig. 2, die den mit II gekennzeichneten Ausschnitt aus der Schnittdarstellung von Fig. 1 wiedergibt, läßt sich erkennen, daß es sich bei dem Verstärkungsträger 10 beispielsweise um einen rohrförmigen Träger handelt, der zur Erhöhung der Crashsicherheit bei einem Seitenaufprall auf die Fahrzeugtür dient. Der Verstärkungsträger 10 ist in dem Ausführungsbeispiel ein Rundrohr mit einem Durchmesser von beispielsweise 40 mm. Selbstverständlich ist die vorliegende Erfindung in keiner Weise auf Verstärkungsträger dieser Form und Abmessungen beschränkt. Weiterhin beträgt in dem Ausführungsbeispiel gemäß Fig. 2 der Abstand zwischen diesem Verstärkungsträger 10 und dem Türaußenblech 13 etwa 5 mm.

Vorzugsweise wird bei der Verbindung zwischen Verstärkungsträger 10 und Türaußenblech 13 so vorgegangen, daß zunächst das blähbare Schaumstoffmaterial 11 auf den Verstärkungsträger 10 aufgetragen wird, beispielsweise so, wie dies in Fig. 2 dargestellt ist, daß auf der einen Seite die Schicht aus dem Verstärkungsmaterial 11 in der Form an die Rundung des rohrförmigen Verstärkungsträgers 10 angepaßt ist und daß das blähbare Material 11 mit der Außenseite des rohrförmigen Verstärkungsträgers 10 verklebt ist. Somit hat das blähbare Material 11 an der auf den rohrförmgen Verstärkungsträger 10 aufgebrachten Verbindungsfläche 11 a eine einer Teilzylinderfläche angepaßte Krümmung. Wird ein anders geformter Verstärkungsträger 10 verwendet, dann kann die diesem zugewandte Verbindungsfläche 11 a des blähbaren Materials in ihrer Form entsprechend dem Außenprofil des Verstärkungsträgers 10 angepaßt werden.

Wie man weiterhin aus Fig. 2 erkennen kann, ist die Schicht aus dem blähbaren Material 11 an der dem Türaußenblech 13 zugewandten Verbindungsfläche 11 b vorzugsweise eben, wenn das Türaußenblech 13 an seiner Innenseite eine dem blähbaren Material 11 zugewandte ebene Fläche aufweist. Ist das Türaußenblech 13 im Bereich der Verbindungsfläche profiliert, kann die Verbindungsfläche 11 b des blähbaren Materials auch vor dem Aufblähen an diese Profilform angepaßt sein.

Zur Verbindung des Verstärkungsträgers 10, auf den bereits das blähbare Material 11 zum Beispiel durch Verkleben aufgebracht ist, mit der Innenseite des Türaußenblechs 13 in dem Verbindungsbereich wird nun Wärme zugeführt, so daß das blähbare Material 11 aufgebläht wird in den Zwischenraum 12 zwischen dem Verstärkungsträger 10 und der Innenseite des Türaußenblechs 13 und dadurch eine dauerhafte Verbindung dieser Bauteile entsteht. Die Zeitdauer, während derer die Wärmezufuhr erfolgt, kann beispielsweise eine halbe Stunde betragen. Diese Verbindungszeit kann vom Fachmann ohne weiteres empirisch ermittelt werden, je nach Art des verwendeten blähbaren Materials 11 sowie abhängig von der Größe des Verstärkungsträgers 10, dem Abstand zwischen Verstärkungsträger 10 und Türaußenblech 13, der Menge des auf den Verstärkungsträger 10 aufgebrachten blähbaren Materials 11 und den Werkstoffen aus denen jeweils der Verstärkungsträger 10 und das Türaußenblech 13 bestehen.

## Patentansprüche

1. Karosseriebauteil umfassend wenigstens ein Außenblech, wenigstens einen Verstärkungsträger und ein zwischen dem Außenblech (13) und dem Verstärkungsträger (10) angeordnetes Schaumstoffmaterial, **dadurch gekennzeichnet, daß** das Schaumstoffmaterial ein geblähtes Material (11) ist, das aufgebracht ist zunächst in blähbarer Form und das durch Wärmezufuhr in den Zwischenraum (12) zwischen Verstärkungsträger (10) und Außenblech (13) gebläht ist.

2. Karosseriebauteil nach Anspruch 1, **dadurch gekennzeichnet, daß** das geblähte Material (11) den Zwischenraum (12) zwischen Verstärkungsträger (10) und Außenblech (13) weitgehend ausfüllt und eine Verbindung zwischen dem Verstärkungsträger (10) und dem Außenblech (13) herstellt.

3. Karosseriebauteil nach Anspruch 1 oder 2, **dadurch gekennzeichnet, daß** das geblähte Material (11) elastische Eigenschaften aufweist, derart, daß bei Verformung des Außenblechs (13) auf dieses eine Rückstellkraft zur Wiederherstellung der ursprünglichen Form ausgeübt wird.

4. Karosseriebauteil nach einem der Ansprüche 1 bis 3, **dadurch gekennzeichnet, daß** das geblähte Material (11) schalldämmende Eigenschaften aufweist.

5. Karosseriebauteil nach einem der Ansprüche 1 bis 4, **dadurch gekennzeichnet, daß** das geblähte Material (11) bei einer Temperatur oberhalb von etwa 200° C, vorzugsweise oberhalb von etwa 220° C expandiert.

6. Karosseriebauteil nach einem der Ansprüche 1 bis 5, **dadurch gekennzeichnet, daß** das Material (11) in blähbarer Form zuerst auf den Verstärkungsträger (10) aufgebracht ist, insbesondere durch Aufkleben.

7. Karosseriebauteil nach einem der Ansprüche 1 bis 6, **dadurch gekennzeichnet, daß** das geblähte Material (11) wasserabweisende Eigenschaften hat.

8. Karosseriebauteil nach einem der Ansprüche 1 bis 7, **dadurch gekennzeichnet, daß** dieses eine Fahrzeugtür ist, das Außenblech (13) ein Türaußenblech ist und der Verstärkungsträger (10) ein Seitenaufprallträger ist.

9. Karosseriebauteil nach einem der Ansprüche 1 bis 8, **dadurch gekennzeichnet, daß** der Verstärkungsträger (10) an seinen beiden Enden (10a, 10b) durch Einstecken in eine Führung montiert ist.

10. Verfahren zur Herstellung eines Karosseriebauteils umfassend wenigstens ein Außenblech, wenigstens einen in Querrichtung verlaufenden Verstärkungsträger und ein zwischen dem Außenblech und dem Verstärkungsträger angeordnetes Schaumstoffmaterial, **dadurch gekennzeichnet, daß** man als Schaumstoffmaterial ein expandierbares Material (11) zunächst aufbringt und daß man dann das expandierbare Material (11) durch Wärmezufuhr expandiert in den Zwischenraum (12) zwischen Verstärkungsträger (10) und Außenblech (13) und so eine Verbindung zwischen dem Verstärkungsträger (10) und dem Außenblech (13) herstellt.

11. Verfahren zur Herstellung eines Karosseriebauteils nach Anspruch 9, **dadurch gekennzeichnet, daß** das expandierbare Material (11) zuerst mit dem Verstärkungsträger (10) verbunden wird, insbesondere durch Aufkleben.

12. Verfahren zur Herstellung eines Karosseriebauteils nach einem der Ansprüche 10 oder 11, **dadurch gekennzeichnet, daß** man das expandierbare Material (11) bei einer Temperatur oberhalb von etwa 200° C, vorzugsweise zwischen etwa 200° C und 250° C, weiter vorzugsweise oberhalb von 220° C expandiert.

13. Verfahren zur Herstellung eines Karosseriebauteils nach einem der Ansprüche 10 bis 12, **dadurch gekennzeichnet, daß** das Karosseriebauteil die kennzeichnenden Merkmale eines oder mehrerer der Ansprüche 1 bis 9 aufweist.

## Claims

1. Bodywork component comprising at least one outside panel, at least one reinforcing support and a foamed material arranged between the outside panel (13) and the reinforcing support (10), **characterized in that** the foamed material is a blown material (11) which is applied initially in blowable form and is blown by feeding heat into the intermediate space (12) between the reinforcing support (10) and outside panel (13).

2. Bodywork component according to Claim 1, **characterized in that** the blown material (11) largely fills the intermediate space (12) between the reinforcing support (10) and outside panel (13) and produces a connection between the reinforcing support (10) and the outside panel (13).

3. Bodywork component according to Claim 1 or 2, **characterized in that** the blown material (11) has elastic properties in such a manner that, when the outside panel (13) is deformed, a restoring force is exerted on the latter in order to reproduce the original form.

4. Bodywork component according to one of Claims 1 to 3, **characterized in that** the blown material (11) has sound-absorbing properties.

5. Bodywork component according to one of Claims 1 to 4, **characterized in that** the blown material (11) expands at a temperature above approximately 200°C, preferably above approximately 220°C.

6. Bodywork component according to one of Claims 1 to 5, **characterized in that** the material (11) is applied in blowable form first of all onto the reinforcing support (10), in particular by bonding.

7. Bodywork component according to one of Claims 1 to 6, **characterized in that** the blown material (11) has water-repelling properties.

8. Bodywork component according to one of Claims 1 to 7, **characterized in that** the said bodywork component is a vehicle door, the outside panel (13) is an outside door panel and the reinforcing support (10) is a side impact support.

9. Bodywork component according to one of Claims 1 to 8, **characterized in that** the reinforcing support (10) is mounted at both of its ends (10a, 10b) by insertion into a guide.

10. Method for producing a bodywork component comprising at least one outside panel, at least one reinforcing support running in the transverse direction and a foamed material arranged between the outside panel and the reinforcing support, **characterized in that** an expandable material (11) is first of all applied as the foamed material, and **in that** the expandable material (11) is then expanded into the intermediate space (12) between the reinforcing support (10) and outside panel (13) by feeding in heat and a connection between the reinforcing support (10) and the outside panel (13) is thus produced.

11. Method for producing a bodywork component according to Claim 9, **characterized in that** the expandable material (11) is first of all connected to the reinforcing support (10), in particular by bonding.

12. Method for producing a bodywork component according to either of Claims 10 and 11, **characterized in that** the expandable material (11) is expanded at a temperature of above approximately 200°C, preferably between approximately 200°C and 250°C, furthermore preferably above 220°C.

13. Method for producing a bodywork component according to one of Claims 10 to 12, **characterized in that** the bodywork component has the characterizing features of one or more of Claims 1 to 9.

## Revendications

1. Composant de carrosserie, qui comprend au moins une tôle extérieure, au moins un support de renfort et un matériau en mousse disposé entre la tôle extérieure (13) et le support de renfort (10), **caractérisé en ce que** le matériau en mousse est un matériau soufflé (11) qui commence par être appliqué sous forme soufflable pour être ensuite soufflé dans l'espace intermédiaire (12) situé entre le support de renfort (10) et la tôle extérieure (13) par apport de chaleur.

2. Composant de carrosserie selon la revendication 1, **caractérisé en ce que** le matériau soufflé (11) remplit largement l'espace intermédiaire (12) situé entre le support de renfort (10) et la tôle extérieure (13) et établit une liaison entre le support de renfort (10) et la tôle extérieure (13).

3. Composant de carrosserie selon la revendication 1 ou 2, **caractérisé en ce que** le matériau soufflé (11) présente des propriétés élastiques de telle sorte que lorsque la tôle extérieure (13) est déformée, il exerce sur elle une force de rappel qui tend à rétablir sa forme initiale.

4. Composant de carrosserie selon l'une des revendications 1 à 3, **caractérisé en ce que** le matériau soufflé (11) présente des propriétés d'isolation acoustique.

5. Composant de carrosserie selon l'une des revendications 1 à 4, **caractérisé en ce que** le matériau soufflé (11) subit une expansion à une température supérieure à environ 200°C et de préférence supérieure à environ 220°C.

6. Composant de carrosserie selon l'une des revendications 1 à 5, **caractérisé en ce que** le matériau (11) sous forme soufflable est d'abord appliqué sur le support de renfort (10), en particulier par collage.

7. Composant de carrosserie selon l'une des revendications 1 à 6, **caractérisé en ce que** le matériau soufflé (11) présente des propriétés de répulsion de l'eau.

8. Composant de carrosserie selon l'une des revendications 1 à 7, **caractérisé en ce que** celui-ci est une porte de véhicule, **en ce que** la tôle extérieure (13) est une tôle extérieure de porte et **en ce que** le support de renfort (10) est un support latéral antichoc.

9. Composant de carrosserie selon l'une des revendications 1 à 8, **caractérisé en ce que** le support de renfort (10) est monté dans un guide par enfichage de ses deux extrémités (10a, 10b).

10. Procédé de fabrication d'un composant de carrosserie qui comprend au moins une tôle extérieure, au moins un support de renfort qui s'étend dans la direction transversale et un matériau en mousse disposé entre la tôle extérieure et le support de renfort, **caractérisé en ce que** l'on commence par appliquer comme matériau en mousse un matériau expansible (11) et **en ce qu'**ensuite le matériau expansible (11) subit une expansion (12) dans l'espace intermédiaire situé entre le support de renfort (10) et la tôle extérieure (13) par apport de chaleur pour ainsi établir une liaison entre le support de renfort (10) et la tôle extérieure (13).

11. Procédé de fabrication d'un composant de carrosserie selon la revendication 9, **caractérisé en ce que** le matériau expansible (11) est d'abord relié au support de renfort (10), en particulier par collage.

12. Procédé de fabrication d'un composant de carrosserie selon l'une des revendications 10 ou 11, **caractérisé en ce que** le matériau expansible (11) subit une expansion à une température supérieure à environ 200°C, de préférence comprise entre environ 200°C et 250°C et de manière encore plus préférable supérieure à 220°C.

13. Procédé de fabrication d'un composant de carrosserie selon l'une des revendications 10 à 12, **caractérisé en ce que** le composant de carrosserie présente les caractéristiques de l'une ou plusieurs des revendications 1 à 9.
